# EUROPÄISCHE PATENTSCHRIFT

(11) **EP 3 321 070 B1**
(45) Veröffentlichungstag und Bekanntmachung des Hinweises auf die Patenterteilung: **24.06.2020**
(21) Anmeldenummer: 17186476.2
(22) Anmeldetag: 16.08.2017
(51) Int. Cl.: B29C 64/393, B29C 64/379

(54) **AUSPACKEINRICHTUNG ZUM AUSPACKEN EINES ADDITIV HERGESTELLTEN DREIDIMENSIONALEN OBJEKTS AUS DEM DIESES UMGEBENDEN BAUMATERIAL**
UNPACKING DEVICE FOR UNPACKING AN ADDITIVELY MANUFACTURED THREE-DIMENSIONAL OBJECT FROM THE SURROUNDING CONSTRUCTION MATERIAL
DISPOSITIF DE DÉBALLAGE PERMETTANT LE DÉBALLAGE D'UN OBJET TRIDIMENSIONNEL CONSTRUIT PAR FABRICATION ADDITIVE EN MATÉRIAU DE CONSTRUCTION ENTOURANT LEDIT OBJET

(30) Priorität: 14.11.2016 DE 102016121775
(43) Veröffentlichungstag der Anmeldung: 16.05.2018
(73) Patentinhaber: CL Schutzrechtsverwaltungs GmbH, 96215 Lichtenfels (DE)
(72) Erfinder: ZEULNER, Fabian, 96215 Lichtenfels (DE)
(74) Vertreter: Hafner & Kohl PartmbB

(56) Entgegenhaltungen:
- WO-A2-2010/083997
- US-A1- 2002 090 410

## Beschreibung

Die Erfindung betrifft eine Auspackeinrichtung zum Auspacken eines additiv hergestellten dreidimensionalen Objekts aus dem dieses nach Beendigung eines additiven Bauvorgangs umgebenden nicht verfestigten Baumaterial, umfassend eine Saug- und/oder Gebläseeinrichtung, welche wenigstens ein Saug- und/oder Gebläsewerkzeug mit Saug- und/oder Gebläsewerkzeugkörper umfasst.

Additiv hergestellte dreidimensionale Objekte sind nach Beendigung des additiven Bauvorgangs bekanntermaßen von nicht verfestigtem pulverartigen bzw. -förmigen Baumaterial umgeben. Zum Auspacken der additiv hergestellten dreidimensionalen Objekte aus dem diese umgebenden Baumaterial sind Auspackeinrichtungen bekannt, welche eine Saug- und/oder Gebläseeinrichtung mit einem einen Saug- und/oder Gebläsewerkzeugkörper umfassenden Saug- und/oder Gebläsewerkzeug umfasst.

Die geometrisch-konstruktive Gestalt entsprechender Saug- und/oder Gebläsewerkzeugkörper ist typischerweise fest vorgegeben, was im Hinblick auf das Auspacken additiv hergestellter dreidimensionaler Objekte unterschiedlicher geometrischer-konstruktiver Gestalt verbesserungswürdig ist, als bestimmte Geometrien der auszupackenden Objekte bisweilen schwer zu erreichen sein können. Die fest vorgegebene geometrisch-konstruktive Gestalt der Saug- und/oder Gebläsewerkzeugkörper kann bei Auspackvorgängen komplex, d. h. insbesondere filigran, gestalteter Objekte zudem eine Gefahr darstellen, als Objekte komplexer geometrisch-konstruktiver Gestalt durch den Saug- und/oder Gebläsewerkzeugkörper gegebenenfalls beschädigt werden können. Die WO2010/083997 A2 und die US2002/0090410 A1 beschreiben beide Auspackeinrichtungen zum Auspacken eins additiv hergestellten dreidimensionalen Objekts.

Der Erfindung liegt damit die Aufgabe zugrunde, eine demgegenüber verbesserte Auspackeinrichtung zum Auspacken eines additiv hergestellten dreidimensionalen Objekts aus dem dieses nach Beendigung eines additiven Bauvorgangs umgebenden nicht verfestigten Baumaterial anzugeben.

Die Aufgabe wird durch eine Auspackeinrichtung gemäß Anspruch 1 gelöst. Die hierzu abhängigen Ansprüche betreffen mögliche Ausführungsformen der Auspackeinrichtung.

Die hierin beschriebene Auspackeinrichtung dient zum Auspacken eines additiv hergestellten dreidimensionalen Objekts ("Objekt") aus dem dieses nach Beendigung eines additiven Bauvorgangs umgebenden (, im Rahmen der additiven Herstellung des Objekts erfolgenden sukzessiven schichtweisen selektiven Belichtung und damit einhergehenden sukzessiven schichtweisen selektiven Verfestigung von Baumaterialschichten, verfestigbaren Baumaterial) nicht verfestigten pulverartigen bzw. -förmigen Baumaterial. Bei dem Baumaterial handelt es sich beispielsweise um ein Metallpulver; gleichwohl sind als Baumaterial auch Keramik- oder Kunststoffpulver denkbar. Unter Auspacken ist im Allgemeinen ein Entfernen von dem das jeweilige Objekt umgebenden Baumaterial zu verstehen; das jeweilige Objekt wird von dem dieses umgebenden Baumaterial "befreit".

Die Auspackeinrichtung umfasst eine Saug- und/oder Gebläseeinrichtung. Die Saug- und/oder Gebläseeinrichtung ist zur Erzeugung einer Saug- und/oder Gebläseströmung zum Auspacken eines jeweiligen Objekts eingerichtet. Die Saug- und/oder Gebläseeinrichtung ist sonach eingerichtet, ein jeweiliges Objekts über ein Absaugen (Saugströmung) und/oder Abblasen (Gebläseströmung) von Baumaterial auszupacken. In allen Fällen lässt sich ein inertes Auspacken jeweiliger Objekte realisieren; mithin kann die verwendete Saug- und/oder Gebläseströmung inert sein.

Die Saug- und/oder Gebläseeinrichtung umfasst wenigstens ein Saug- und/oder Gebläsewerkzeug. Das Saug- und/oder Gebläsewerkzeug umfasst einen Saug- und/oder Gebläsewerkzeugkörper. In dem Saug- und/oder Gebläsewerkzeugkörper ist typischerweise wenigstens eine, insbesondere düsenartige bzw. -förmige, Saug- und/oder Gebläseöffnung für eine Saug- und/oder Gebläseströmung gebildet. Jeweilige Saug- und/oder Gebläseöffnungen des Saug- und/oder Gebläsewerkzeugkörpers sind zweckmäßig so angeordnet bzw. ausgerichtet, dass diese dem auszupackenden Objekt zugewandt sind. Das Saug- und/oder Gebläsewerkzeug ist über ein von einer Saug- bzw. Gebläseströmung durchströmbares Leitungselement mit einem eine Saug- bzw. Gebläseströmung erzeugenden Teil der Saug- und/oder Gebläseeinrichtung verbunden. Der Saug- und/oder Gebläsewerkzeugkörper kann (zusätzlich) einen mehrere borstenartig angeordnete oder ausgebildete, insbesondere textile, Bürstenelemente umfassenden Bürstenbesatz aufweisen.

Die geometrisch-konstruktive Gestalt, d. h. insbesondere die Abmessungen und/oder die Form bzw. Grundform, des Saug- und/oder Gebläsewerkzeugkörpers ist individuell an wenigstens einen Teilbereich der geometrisch-konstruktiven Gestalt wenigstens eines auszupackenden Objekts, gegebenenfalls die gesamte geometrisch-konstruktive Gestalt wenigstens eines auszupackenden Objekts, anpassbar bzw. angepasst. Die räumlich-körperliche äußere Gestalt des Saug- und/oder Gebläsewerkzeugkörpers entspricht sonach gezielt wenigstens einem Teilbereich der räumlich-körperlichen äußeren Gestalt des auszupackenden Objekts, gegebenenfalls der gesamten räumlich-körperlichen äußeren Gestalt des auszupackenden Objekts. Die geometrisch-konstruktive Gestalt des Saug- und/oder Gebläsewerkzeugkörpers kann auf Grundlage von die geometrisch-konstruktive Gestalt wenigstens eines auszupackenden Objekts beschreibenden Daten, insbesondere auf Grundlage von die geometrisch-konstruktive Gestalt eines auszupackenden Objekts beschreibenden Baudaten, gewählt. Es liegt eine zumindest bereichsweise an die Geometrie eines auszupackenden Objekts gezielt anpassbare bzw. angepasste Saug- und/oder Gebläsewerkzeugkörpergeometrie vor.

Weist ein auszupackendes Objekt - wie etwa bei einem Zylinder bzw. Hohlzylinder - beispielsweise eine runde bzw. rundliche geometrisch-konstruktive Gestalt auf, ist auch die geometrisch-konstruktive Gestalt des Saug- und/oder Gebläsewerkzeugkörpers rund bzw. rundlich. In diesem Fall wird also ein Saug- und/oder Gebläsewerkzeugkörper mit einer an die runde bzw. rundliche Geometrie des auszupackenden Objekts angepassten geometrisch-konstruktiven Gestalt, d. h. ein Saug- und/oder Gebläsewerkzeugkörper mit einer der runden bzw. rundlichen geometrisch-konstruktiven Gestalt des auszupackenden Objekts entsprechenden runden bzw. rundlichen geometrisch-konstruktiven Gestalt, verwendet. Weist ein auszupackendes Objekt - wie etwa bei einem Polyeder - eine mehrere ebene Flächen aufweisende geometrisch-konstruktive Gestalt auf, ist auch die geometrisch-konstruktive Gestalt des Saug- und/oder Gebläsewerkzeugkörpers flächig. In diesem Fall wird also ein Saug- und/oder Gebläsewerkzeugkörper mit einer der mehrere ebene Flächen aufweisenden geometrisch-konstruktiven Gestalt des auszupackenden Objekts entsprechenden flächigen geometrisch-konstruktiven Gestalt verwendet. Diese Prinzipien gelten für jedwede andere geometrisch definierte bzw. nicht geometrisch definierte geometrisch-konstruktive Gestalt eines auszupackenden Objekts und der dieser zumindest bereichsweise nachempfundenen geometrisch-konstruktiven Gestalt des Saug- und/oder Gebläsewerkzeugkörpers analog.

Der Saug- und/oder Gebläsewerkzeugkörper kann bzw. einzelne, mehrere oder sämtliche Saug- und/oder Gebläsewerkzeugkörperabschnitte können daher z. B. zumindest abschnittsweise eine zwei- oder dreidimensional geradlinig verlaufende Form bzw. Grundform und/oder zumindest abschnittsweise eine zwei- oder dreidimensional gebogen verlaufende Form bzw. Grundform aufweisen. Beispielsweise wird auf eine, gegebenenfalls zumindest abschnittsweise gebogen verlaufende, kanülenartige bzw. -förmige geometrisch-konstruktive Gestalt des Saug- und/oder Gebläsewerkzeugkörpers bzw. eines Saug- und/oder Gebläsewerkzeugkörperabschnitts verwiesen, sodass das Saug- und/oder Gebläsewerkzeugkörper bzw. ein jeweiliger Saug- und/oder Gebläsewerkzeugkörperabschnitt z. B. durch eine in einem auszupackenden Objekt vorhandene Öffnung in einen Innenraum des Objekts geführt werden kann; die Querschnittsgeometrie des Saug- und/oder Gebläsewerkzeugkörper(abschnitt)s ist an die Querschnittsgeometrie der Öffnung angepasst. Es sei an dieser Stelle nochmals zu erwähnen, dass der Saug- und/oder Gebläsewerkzeugkörper, je nach geometrisch-konstruktiver Gestalt des oder der auszupackenden Objekte, eine individuell angepasste geometrisch definierte oder geometrisch nicht definierte (freie) geometrisch-konstruktive Gestalt aufweist.

Die Auspackeinrichtung ermöglicht es, dass der Saug- und/oder Gebläsewerkzeugkörper näher an ein auszupackendes Objekt und/oder - im Falle mehrerer auszupackender Objekte - näher zwischen benachbart angeordnete auszupackende Objekte heranzuführen. Der Saug- und/oder Gebläsewerkzeugkörper kann an das Objekt oder, gegebenenfalls durch in dem Objekt vorhandene Öffnungen, in gegebenenfalls vorhandene Innenräume des Objekts geführt werden. Der eingangs beschriebenen Schwierigkeit, wonach bestimmte Geometrien eines auszupackenden, insbesondere komplex gestalteten, Objekts aufgrund einer fest vorgegebenen geometrisch-konstruktiven Gestalt des Saug- und/oder Gebläsewerkzeugkörpers mit dem Saug- und/oder Gebläsewerkzeugkörper nur schwer zu erreichen sind, ist damit Rechnung getragen. Zudem ist das Potential einer Beschädigung bei Auspackvorgängen komplex, d. h. insbesondere filigran, gestalteter Objekte reduziert, da die geometrisch-konstruktive Gestalt des Saug- und/oder Gebläsewerkzeugkörpers der geometrisch-konstruktiven Gestalt des Objekts folgt. Insgesamt liegt eine demgegenüber verbesserte Auspackeinrichtung vor.

Der Saug- und/oder Gebläsewerkzeugkörper kann mehrere Saug- und/oder Gebläsewerkzeugkörpersegmente umfassen, welche unter Ausbildung des Saug- und/oder Gebläsewerkzeugkörpers lösbar aneinander befestigbar oder befestigt sind. Der Saug- und/oder Gebläsewerkzeugkörper kann sonach nach dem Baukastenprinzip durch einzelne Saug- und/oder Gebläsewerkzeugkörpersegmente zusammengesetzt sein. Je nach geometrisch-konstruktiver Gestalt der den Saug- und/oder Gebläsewerkzeugkörper bildenden Saug- und/oder Gebläsewerkzeugkörpersegmente ist eine in geometrisch-konstruktiver Hinsicht beliebige, d. h. individuell anpassbare bzw. angepasste, Konfiguration des Saug- und/oder Gebläsewerkzeugkörpers möglich. Entsprechende Saug- und/oder Gebläsewerkzeugkörpersegmente können sonach eine gleiche oder eine unterschiedliche geometrisch-konstruktive Gestalt aufweisen. Durch eine beispielhafte Kombination geradlinig und gebogen verlaufender Saug- und/oder Gebläsewerkzeugkörpersegmente lässt sich z. B. eine L- oder U-Form des Saug- und/oder Gebläsewerkzeugkörpers realisieren. Durch eine weitere beispielhafte Kombination, gegebenenfalls unterschiedlich, gebogen verlaufender Saug- und/oder Gebläsewerkzeugkörpersegmente lässt sich z. B. eine Ring- oder Wellenform des Saug- und/oder Gebläsewerkzeugkörpers realisieren.

Jeweilige Saug- und/oder Gebläsewerkzeugkörpersegmente sind typischerweise mit geeigneten Befestigungsschnittstellen ausgestattet, welche eine stabile, gleichwohl typischerweise lösbare Befestigung dieser aneinander gewährleisten. Entsprechende Befestigungsschnittstellen können z. B. eine form- und/oder kraftschlüssige Befestigung jeweiliger Saug- und/oder Gebläsewerkzeugkörpersegmente aneinander ermöglichen. Beispielhaft wird auf Klips-, Klemm-, Rast- und Schraubbefestigungen verwiesen.

Jeweilige Saug- und/oder Gebläsewerkzeugkörpersegmente sind typischerweise mit wenigstens einem Strömungskanalabschnitt ausgestattet. Die Strömungskanalabschnitte bilden im aneinander befestigten Zustand jeweiliger Saug- und/oder Gebläsewerkzeugkörpersegmente einen den Saug- und/oder Gebläsewerkzeugkörper zumindest abschnittsweise durchsetzenden Strömungskanal. Der Strömungskanal kommuniziert einerseits mit entsprechenden Saug- und/oder Gebläseöffnungen des Saug- und/oder Gebläsewerkzeugkörpers und andererseits mit einem von einer Saug- bzw. Gebläseströmung durchströmbaren Leitungselement, über welches das Saug- und/oder Gebläsewerkzeug mit einem eine Saug- bzw. Gebläseströmung erzeugenden Teil der Saug- und/oder Gebläseeinrichtung verbunden ist.

Bei dem Saug- und/oder Gebläsewerkzeugkörper bzw. einem entsprechenden Saug- und/oder Gebläsewerkzeugkörpersegment kann es sich zumindest abschnittsweise, gegebenenfalls insgesamt, um ein additiv hergestelltes Bauteil bzw. eine additiv hergestellte Bauteilgruppe handeln. Durch eine additive Herstellung des Saug- und/oder Gebläsewerkzeugkörper(segment)s lässt sich dieser bzw. dieses in nahezu beliebigen geometrisch-konstruktiven Gestaltungen herstellen.

Die Auspackeinrichtung umfasst eine Speichereinrichtung. In der Speichereinrichtung sind mehrere Saug- und/oder Gebläsewerkzeugkörper gegebener geometrisch-konstruktiver Gestalt und/oder mehrere Saug- und/oder Gebläsewerkzeugkörpersegmente gegebener geometrisch-konstruktiver Gestalt anordenbar oder angeordnet. Die Speichereinrichtung dient im Sinne eines Lagers bzw. eines Magazins der Vorhaltung von Saug- und/oder Gebläsewerkzeugkörper(segmenten) gegebener geometrisch-konstruktiver Gestalt, sodass im Bedarfsfall einfach und schnell auf entsprechende Saug- und/oder Gebläsewerkzeugkörper(segmente) zugegriffen werden kann, um eine wie beschriebene an die Geometrie eines auszupackenden Objekts angepasste Saug- und/oder Gebläsewerkzeugkörpergeometrie bereitzustellen. Die Saug- und/oder Gebläsewerkzeugkörper(segmente) können in der Speichereinrichtung nach geometrisch-konstruktiven Kriterien, insbesondere nach geometrischer Dimension und/oder geometrischer Grundform, geordnet anordenbar oder angeordnet sein. In allen Fällen kann die Speichereinrichtung mehrere Speicherabteile umfassen, welche für die Speicherung bzw. Lagerung von Saug- und/oder Gebläsewerkzeugkörper(segmente)n bestimmter geometrisch-konstruktiver Gestalt vorgesehen, d. h. in ihren Abmessungen entsprechend angepasst, sind, sodass die Speichereinrichtung insgesamt einen möglichst kompakten Aufbau aufweist.

Die Auspackeinrichtung umfasst einen wenigstens drei Roboterachsen aufweisenden Roboter, insbesondere Industrieroboter, wobei der Saug- und/oder Gebläsewerkzeugkörper an einer Roboterachse angeordnet oder ausgebildet ist. Ein entsprechender Roboter weist typischerweise wenigstens einen Roboterarm auf, welcher mehrere über Gelenkelemente gelenkig miteinander verbundene, typischerweise seriell nacheinander geschaltet angeordnete Roboterglieder umfasst. Die Roboterachsen sind typischerweise jeweiligen Robotergliedern zugeordnet. Der Roboter kann z. B. als ein Gelenk- oder Knickarmroboter mit mehreren seriell nacheinander geschaltet angeordneten, über jeweilige Gelenkelemente gelenkig miteinander verbundenen Robotergliedern ausgeführt sein. Eines, mehrere oder alle Gelenkelemente des Roboters können als Drehgelenke ausgebildet sein. Grundsätzlich kann der Roboter jedwede Art von wenigstens drei Roboterachsen aufweisender Roboter bzw. Industrieroboter sein. Das Saug- und/oder Gebläsewerkzeugkörper ist, wie erwähnt, an einer Roboterachse angeordnet oder ausgebildet. Bei der Roboterachse, an welcher das wenigstens eine Auspackwerkzeug angeordnet oder ausgebildet ist, handelt es sich typischerweise um eine Roboterachse, welche einem ein freies Ende des Roboterarms bildenden Roboterglied zugeordnet ist. Durch den Umstand, dass die Auspackeinrichtung wenigstens einen entsprechenden Roboter umfasst, ist ein voll automatisierbares bzw. voll automatisiertes Auspacken jeweiliger Objekte möglich. Es ist nicht notwendig, dass der Saug- und/oder Gebläsewerkzeugkörper manuell gehandhabt wird. Auspackvorgänge sind sowohl im Hinblick auf Automatisierbarkeit, Effizienz und Sicherheit verbessert. Der Roboter kann mehr als drei Roboterachsen, insbesondere fünf, sechs oder mehr, Roboterachsen aufweisen. Je mehr Roboterachsen der Roboter aufweist, desto größer ist seine Bewegungsfreiheit im Rahmen des Auspackens jeweiliger Objekte. Es wurde erwähnt, dass der Roboter als Gelenk- bzw. Knickarmroboter ausgeführt sein kann. Eine zweckmäßige Ausführungsform sieht eine Ausbildung des Roboters als fünf- oder sechsachsiger Gelenk- bzw. Knickarmroboter vor. Unabhängig von deren Anzahl und somit auch von der konkreten Ausführung des Roboters sind jeweilige Roboterachsen typischerweise unabhängig voneinander ansteuerbar. Die Roboterachsen sind entsprechend auch unabhängig voneinander bewegbar. Typischerweise ist jede Roboterachse in wenigstens einem Bewegungsfreiheitsgrad bewegbar.

Der Saug- und/oder Gebläsewerkzeugkörper ist lösbar an der Roboterachse angeordnet, sodass er bedarfsweise auswechselbar an der Roboterachse angeordnet ist. Zur Realisierung einer lösbaren Befestigung des Saug- und/oder Gebläsewerkzeugkörpers können seitens des Roboters und/oder seitens des Saug- und/oder Gebläsewerkzeugkörpers geeignete, insbesondere mechanische, Befestigungsschnittstellen angeordnet oder ausgebildet sein, welche eine lösbare Befestigung des Saug- und/oder Gebläsewerkzeugkörpers an der Roboterachse ermöglichen. Eine lösbare Befestigung des Saug- und/oder Gebläsewerkzeugkörpers an der Roboterachse kann jedoch auch dadurch realisiert sein, dass die Roboterachse ein Greifelement umfasst, welches zum Greifen des Saug- und/oder Gebläsewerkzeugkörpers eingerichtet ist.

Durch die lösbare Anordnung bzw. Befestigung des Saug- und/oder Gebläsewerkzeugkörpers an der Roboterachse ist es möglich, dass der Saug- und/oder Gebläsewerkzeugkörper bedarfsweise auswechselbar an der Roboterachse angeordnet bzw. befestigt ist. Ein Auswechselvorgang des Saug- und/oder Gebläsewerkzeugkörpers kann ebenso automatisiert erfolgen. Der Roboter kann, z. B. in einem hierfür eigens vorgesehenen Werkzeugwechselmodus bzw. -programm, eingerichtet sein, einen Wechsel eines Saug- und/oder Gebläsewerkzeugkörpers vorzunehmen. Hierbei kann der Roboter z. B. in eine Auswechselposition bewegbar sein, in welcher der Roboter selbstständig einen Wechsel eines Saug- und/oder Gebläsewerkzeugkörpers vornimmt. In der Auswechselposition kann der Roboter, d. h. wenigstens die Roboterachse, an welcher der Saug- und/oder Gebläsewerkzeugkörper lösbar zu befestigen bzw. befestigt ist, Saug- und/oder Gebläsewerkzeugkörper in eine bereits erwähnte, der Auspackeinrichtung zugeordnete Speichereinrichtung geben bzw. aus einer der Auspackeinrichtung zugeordneten Speichereinrichtung entnehmen.

Die Auspackeinrichtung umfasst eine hard- und/oder softwaremäßig implementierte Steuereinrichtung, die zur Steuerung des Betriebs eines entsprechenden Roboters eingerichtet ist. Die Steuereinrichtung ist zur Erzeugung von die Bewegungen der Roboterachsen im Betrieb des Roboters steuernden Steuerungsinformationen eingerichtet. Die Steuereinrichtung ist eingerichtet, insbesondere unter Berücksichtigung der geometrisch-konstruktiven Gestalt eines auszupackenden Objekts, den Roboter anzusteuern, sodass dieser einen Saug- und/oder Gebläsewerkzeugkörper mit einer an wenigstens einen Teilbereich der geometrisch-konstruktiven Gestalt des auszupackenden Objekts angepassten geometrisch-konstruktiven Gestalt und/oder mehrere Saug- und/oder Gebläsewerkzeugkörpersegmente zur Ausbildung eines Saug- und/oder Gebläsewerkzeugkörpers mit einer an wenigstens einen Teilbereich der geometrisch-konstruktiven Gestalt des auszupackenden Objekts angepassten geometrisch-konstruktiven Gestalt auswählt und zum Auspacken des auszupackenden Objekts verwendet. Eine entsprechend eingerichtete Steuereinrichtung wirkt sich positiv auf die Automatisierbarkeit der mit der Auspackeinrichtung durchführbaren bzw. durchgeführten Auspackvorgänge aus.
Die Steuereinrichtung kann ferner eingerichtet sein, entsprechende Steuerungsinformationen auf Grundlage von die geometrisch-konstruktive Gestalt eines jeweils auszupackenden Objekts beschreibenden Daten, insbesondere auf Grundlage von die geometrisch-konstruktive Gestalt eines jeweils auszupackenden Objekts beschreibenden Baudaten, zu erzeugen. Die Bewegungen der Roboterachsen können sonach auf die geometrisch-konstruktive Gestalt bzw. die geometrisch-konstruktiven Merkmale, d. h. insbesondere die Außen- und/oder Innenkontur, etwaige Hinterschneidungen, etc., des auszupackenden Objekts abgestimmt sein. Auspackvorgänge können individuell unter Berücksichtigung der geometrisch-konstruktiven Gestalt eines jeweils auszupackenden Objekts gesteuert werden. Derart kann die Effizienz der mit der Auspackeinrichtung durchführbaren bzw. durchgeführten Auspackvorgänge (erheblich) gesteigert werden.

Die Erfindung betrifft neben der Auspackeinrichtung auch eine Auspackstation für eine Anlage zur additiven Herstellung dreidimensionaler Objekte. Die Auspackstation zeichnet sich dadurch aus, dass sie wenigstens eine wie beschriebene Auspackeinrichtung umfasst. Mithin gelten sämtliche Ausführungen im Zusammenhang mit der Auspackeinrichtung analog für die Auspackstation.

Die Auspackstation kann eine, insbesondere quaderförmige, Auspackkammer umfassen, welche einen Teil einer der Auspackstation zugehörigen Gehäusekonstruktion bilden kann. Die Auspackstation ist typischerweise inertisierbar bzw. inertisiert. Der oder die der Auspackeinrichtung zugehörige(n) Roboter, sofern vorhanden, kann bzw. können an oder in einer die Auspackkammer (mit)begrenzenden Boden-, Seiten- oder Deckenwandung der Auspackkammer angeordnet oder ausgebildet sein. Grundsätzlich sind sowohl stehende als auch (seitlich) hängende Anordnungen von Robotern denkbar.

Die Auspackeinrichtung bzw. der oder die der Auspackeinrichtung zugehörige(n) Roboter, sofern vorhanden, kann bzw. können ortsfest oder in wenigstens einem Bewegungsfreiheitsgrad bewegbar gelagert in der Auspackkammer angeordnet oder ausgebildet sein. Sofern der oder die Roboter nicht über eigene Bewegungsantriebe verfügen, können auspackkammerseitig geeignete Bewegungseinrichtungen vorhanden sein, welche eine, insbesondere entlang einer bestimmten Bewegungsbahn, geführte Bewegung der Auspackeinrichtung bzw. eines Roboters ermöglichen. Entsprechende Bewegungseinrichtungen können z. B. eine geführte Bewegung der Auspackeinrichtung bzw. eines Roboters entlang eines auszupackenden Objekts innerhalb eines ein auszupackendes Objekt enthaltenden, in die Auspackstation bewegten Baumoduls ermöglichen. Der Roboter kann dabei in (vor)definierte Auspackpositionen bewegt werden. Die Auspackpositionen können wiederum auf Grundlage der geometrisch-konstruktiven Gestalt des auszupackenden Objekts gewählt sein.

Neben der Auspackeinrichtung und der Auspackstation betrifft die Erfindung auch eine Anlage zur additiven Herstellung dreidimensionaler Objekte. Die Anlage zeichnet sich dadurch aus dass sie wenigstens eine wie beschriebene Auspackstation umfasst. Mithin gelten sämtliche Ausführungen im Zusammenhang mit der Auspackeinrichtung sowie im Zusammenhang mit der Auspackstation analog für die Anlage.

Neben der Auspackstation umfasst die Anlage typischerweise wenigstens eine Vorrichtung zur additiven Herstellung dreidimensionaler Objekte, d. h. beispielsweise technischer Bauteile bzw. technischer Bauteilgruppen, durch sukzessives schichtweises selektives Belichten und damit einhergehendes Verfestigen von Baumaterialschichten aus einem vermittels eines Laserstrahls verfestigbaren Baumaterial. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten eines jeweiligen additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Erfindung ist anhand von Ausführungsbeispielen in den Zeichnungsfiguren näher erläutert. Dabei zeigen:
- Fig. 1: eine Prinzipdarstellung einer Auspackstation gemäß einem Ausführungsbeispiel;
- Fig. 2: eine Prinzipdarstellung eines Roboters gemäß einem Ausführungsbeispiel; und
- Fig. 3 - 8: jeweils eine Prinzipdarstellung eines Saug- und/oder Gebläsewerkzeugs gemäß einem Ausführungsbeispiel.

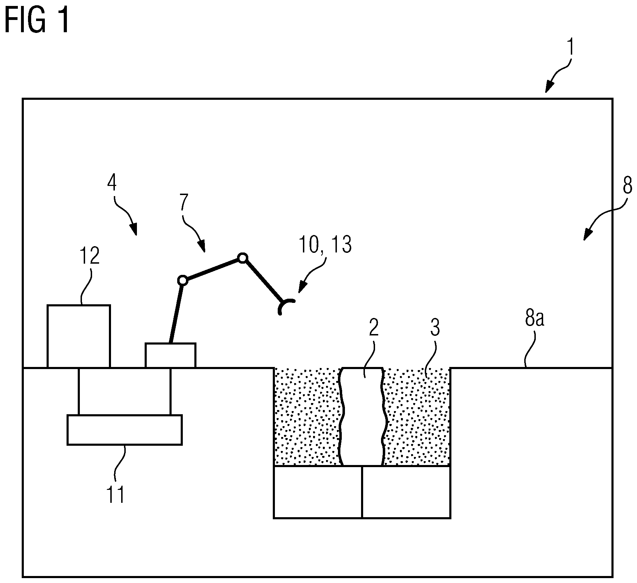

Fig. 1 zeigt eine Prinzipdarstellung einer Auspackstation 1 gemäß einem Ausführungsbeispiel.

Die Auspackstation 1 ist einer Vorrichtung (nicht gezeigt) zur additiven Herstellung dreidimensionaler Objekte 2, d. h. insbesondere technischer Bauteile bzw. technischer Bauteilgruppen, zugeordnet. Die Vorrichtung ist zur additiven Herstellung dreidimensionaler Objekte 2 durch sukzessives schichtweises selektives Belichten und damit einhergehendes Verfestigen von Baumaterialschichten aus einem verfestigbaren Baumaterial 3, d. h. z. B. eines Metallpulvers, vermittels eines Laserstrahls eingerichtet. Die selektive Verfestigung jeweiliger selektiv zu verfestigender Baumaterialschichten erfolgt auf Grundlage von objektbezogenen Baudaten. Entsprechende Baudaten beschreiben die geometrisch-konstruktive Gestalt eines jeweils additiv herzustellenden Objekts 2.

Die Vorrichtung wie auch die dieser zugeordnete Auspackstation 1 bilden Bestandteile einer übergeordneten Anlage (nicht gezeigt) zur additiven Herstellung dreidimensionaler Objekte 2.

Die Auspackstation 1 umfasst eine Auspackeinrichtung 4. Die Auspackeinrichtung 4 ist in einer mit einem Inertgas, wie z. B. Argon, Stickstoff, etc., inertisierbaren bzw. inertisierten Auspackkammer 8 der Auspackstation 1 angeordnet. Die Auspackkammer 8 kann einen Teil einer der Auspackstation 1 zugehörigen Gehäusekonstruktion (nicht näher bezeichnet) bilden.

Die Auspackeinrichtung 4 ist zum Auspacken eines additiv hergestellten dreidimensionalen Objekts 2 aus dem dieses nach Beendigung eines additiven Bauvorgangs umgebenden nicht verfestigten pulverartigen bzw. -förmigen Baumaterial 3 eingerichtet. In dem in Fig. 1 gezeigten Ausführungsbeispiel ist das Objekt 2 nebst dem dieses umgebenden Baumaterial 3 in einem Bauraum 5 bzw. in einer Baukammer eines in die Auspackstation 1 bewegten Baumoduls 6 angeordnet.

Die Auspackeinrichtung 4 umfasst eine Saug- und/oder Gebläseeinrichtung 12. Die Saug- und/oder Gebläseeinrichtung 12 ist zur Erzeugung einer Saug- und/oder Gebläseströmung zum Auspacken eines jeweiligen Objekts 2 eingerichtet. Die Auspackeinrichtung 4 ist sonach eingerichtet, das Objekt 2 über ein Absaugen (Saugströmung) und/oder ein Abblasen (Gebläseströmung) von Baumaterial auszupacken. Die verwendete Saug- und/oder Gebläseströmung kann inert sein; bei der Saug- und/oder Gebläseströmung kann es sich z. B. um eine Argon- oder Stickstoffströmung handeln.

Die Saug- und/oder Gebläseeinrichtung 12 umfasst ein Saug- und/oder Gebläsewerkzeug 10. Das Saug- und/oder Gebläsewerkzeug 10 umfasst einen Saug- und/oder Gebläsewerkzeugkörper 13. In dem Saug- und/oder Gebläsewerkzeugkörper 13 ist wenigstens eine, insbesondere düsenartige bzw. -förmige, Saug- und/oder Gebläseöffnung 14 für eine Saug- und/oder Gebläseströmung ausgebildet. Das Saug- und/oder Gebläsewerkzeug 10 ist über ein von einer Saug- bzw. Gebläseströmung durchströmbares Leitungselement 15 mit einem eine Saug- bzw. Gebläseströmung erzeugenden Teil der Saug- und/oder Gebläseeinrichtung 12 verbunden. Der Saug- und/oder Gebläsewerkzeugkörper 13 kann (zusätzlich) einen mehrere borstenartig angeordnete oder ausgebildete, insbesondere textile, Bürstenelemente umfassenden Bürstenbesatz (nicht gezeigt) aufweisen.

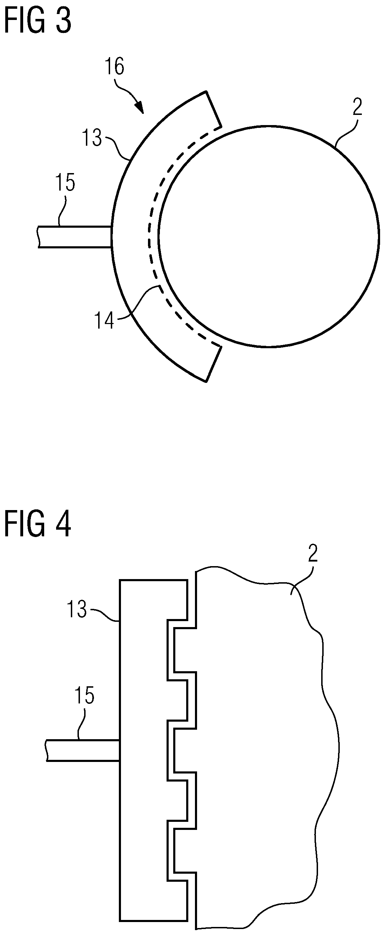

Wie insbesondere anhand der in den Fig. 3 - 8 gezeigten Ausführungsbeispiele jeweiliger Saug- und/oder Gebläsewerkzeugkörper 13 ersichtlich ist, ist die geometrisch-konstruktive Gestalt, d. h. insbesondere die Abmessungen und/oder die Form bzw. Grundform, des Saug- und/oder Gebläsewerkzeugkörpers 13 an wenigstens einen Teilbereich der geometrisch-konstruktiven Gestalt des jeweils auszupackenden Objekts 2 bzw. an die gesamte geometrisch-konstruktive Gestalt des jeweils auszupackenden Objekts 2 anpassbar bzw. angepasst. Die räumlich-körperliche äußere Gestalt des Saug- und/oder Gebläsewerkzeugkörpers 13 entspricht sonach zumindest bereichsweise der gesamten räumlich-körperlichen äußeren Gestalt des jeweils auszupackenden Objekts 2. Die geometrisch-konstruktive Gestalt des Saug- und/oder Gebläsewerkzeugkörpers kann auf Grundlage von die geometrisch-konstruktive Gestalt des jeweils auszupackenden Objekts 2 beschreibenden Daten, insbesondere auf Grundlage von die geometrisch-konstruktive Gestalt des jeweils auszupackenden Objekts 2 beschreibenden Baudaten, gewählt sein.

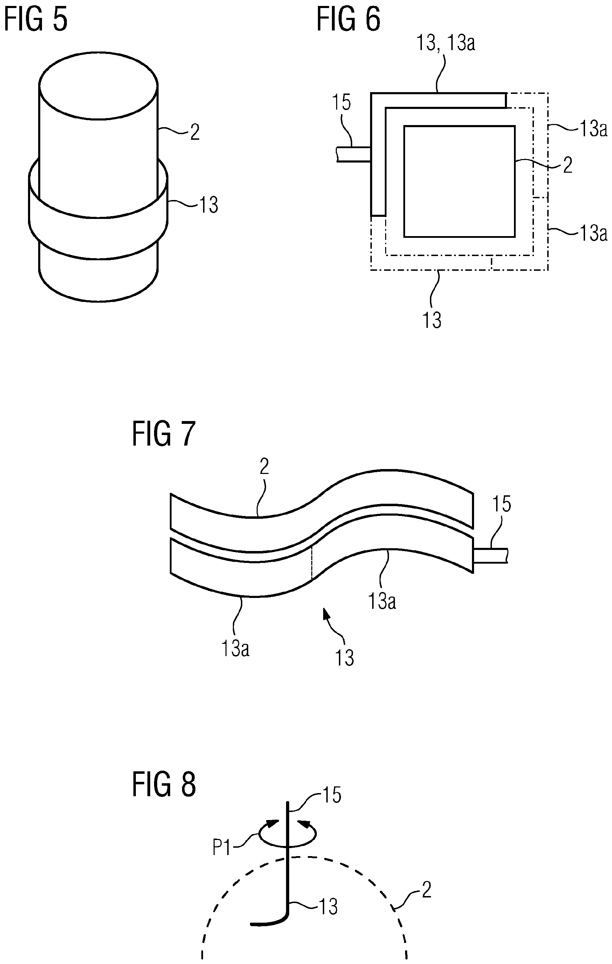

Weist ein auszupackendes Objekt 2 - wie etwa bei einem Zylinder bzw. Hohlzylinder - beispielsweise eine runde bzw. rundliche geometrisch-konstruktive Gestalt auf, ist auch die geometrisch-konstruktive Gestalt des Saug- und/oder Gebläsewerkzeugkörpers 13 rund bzw. rundlich (vgl. Fig. 3, 5). In diesem Fall kann bzw. wird ein Saug- und/oder Gebläsewerkzeugkörper 13 mit einer an die runde bzw. rundliche Geometrie des auszupackenden Objekts 2 angepassten geometrisch-konstruktiven Gestalt verwendet. Weist ein auszupackendes Objekt 2 - wie etwa bei einem Polyeder - eine mehrere ebene Flächen aufweisende geometrisch-konstruktive Gestalt auf, ist auch die geometrisch-konstruktive Gestalt des Saug- und/oder Gebläsewerkzeugkörpers 13 flächig. In diesem Fall kann bzw. wird ein Saug- und/oder Gebläsewerkzeugkörper 13 mit einer der mehrere ebene Flächen aufweisenden geometrisch-konstruktiven Gestalt des auszupackenden Objekts 2 entsprechenden flächigen geometrisch-konstruktiven Gestalt verwendet.

In dem in Fig. 3 in einer Aufsicht gezeigten Ausführungsbeispiel eines Saug- und/oder Gebläsewerkzeugkörpers 13 ist der Saug- und/oder Gebläsewerkzeugkörper 13 entsprechend der Wölbung der äußeren Kontur des Objekts 2 gebogen bzw. gewölbt verlaufend ausgebildet. Der Saug- und/oder Gebläsewerkzeugkörper 13 umgibt (in Umfangsrichtung) wenigstens einen Teil der äußeren Kontur des Objekts 2.

In dem in Fig. 4 in einer Aufsicht gezeigten Ausführungsbeispiel eines Saug- und/oder Gebläsewerkzeugkörpers 13 ist der Saug- und/oder Gebläsewerkzeugkörper 13 entsprechend der, insbesondere zacken- oder zinnenartig bzw. -förmig, gestuften äußeren Kontur des Objekts 2 gestuft verlaufend ausgebildet. Der Saug- und/oder Gebläsewerkzeugkörper 13 umgibt (in Umfangsrichtung) wenigstens einen Teil der äußeren Kontur des Objekts 2.

In dem in Fig. 5 in einer Perspektive gezeigten Ausführungsbeispiel eines Saug- und/oder Gebläsewerkzeugkörpers 13 ist der Saug- und/oder Gebläsewerkzeugkörper 13 entsprechend der Rundung der äußeren Kontur des (hohl)zylindrischen Objekts 2 ringförmig verlaufend ausgebildet. Der Saug- und/oder Gebläsewerkzeugkörper 13 umgibt die äußere Kontur des Objekts 2 (in Umfangsrichtung) vollständig.

In dem in Fig. 6 in einer Aufsicht gezeigten Ausführungsbeispiel eines Saug- und/oder Gebläsewerkzeugkörpers 13 ist der Saug- und/oder Gebläsewerkzeugkörper 13 entsprechend der viereckigen äußeren Kontur des Objekts 2 viereckförmig verlaufend ausgebildet. Der Saug- und/oder Gebläsewerkzeugkörper 13 umgibt die äußere Kontur des auszupackenden Objekts 2 (in Umfangsrichtung) vollständig. Der Saug- und/oder Gebläsewerkzeugkörper 13 ist hier durch mehrere aneinander befestigte, jeweils beispielhaft eine L-Form aufweisende Saug- und/oder Gebläsewerkzeugkörpersegmente 13a gebildet. Zur Erläuterung, dass der Gebläsewerkzeugkörper 13 auch nur ein (einziges) Gebläsewerkzeugkörpersegment 13a umfassen kann, sind optionale Gebläsewerkzeugkörpersegmente 13a strichliert dargestellt.

In dem in Fig. 7 in einer Aufsicht gezeigten Ausführungsbeispiel eines Saug- und/oder Gebläsewerkzeugkörpers 13 ist der Saug- und/oder Gebläsewerkzeugkörper 13 entsprechend der wellenförmig gebogenen äußeren Kontur des Objekts 2 wellenförmig gebogen verlaufend ausgebildet. Der Saug- und/oder Gebläsewerkzeugkörper 13 umgibt einen Teil der äußeren Kontur des auszupackenden Objekts 2 (in Längsrichtung). Der Saug- und/oder Gebläsewerkzeugkörper 13 ist hier durch mehrere aneinander befestigte, jeweils beispielhaft einen gebogenen Verlauf aufweisende Saug- und/oder Gebläsewerkzeugkörpersegmente 13a gebildet.

Anhand der in den Fig. 6, 7 gezeigten Ausführungsbeispiele lässt sich erkennen, dass der Saug- und/oder Gebläsewerkzeugkörper 13 mehrere Saug- und/oder Gebläsewerkzeugkörpersegmente 13a umfassen kann, welche unter Ausbildung des Saug- und/oder Gebläsewerkzeugkörpers 13 lösbar aneinander befestigbar bzw. befestigt sind. Je nach geometrisch-konstruktiver Gestalt der den Saug- und/oder Gebläsewerkzeugkörper 13 bildenden Saug- und/oder Gebläsewerkzeugkörpersegmente 13a ist eine in geometrisch-konstruktiver Hinsicht individuell anpassbare bzw. angepasste Konfiguration des Saug- und/oder Gebläsewerkzeugkörpers 13 möglich. Entsprechende Saug- und/oder Gebläsewerkzeugkörpersegmente 13a können eine gleiche oder eine unterschiedliche geometrisch-konstruktive Gestalt aufweisen.

Jeweilige Saug- und/oder Gebläsewerkzeugkörpersegmente 13a sind mit geeigneten Befestigungsschnittstellen (nicht gezeigt) ausgestattet, welche eine stabile, gleichwohl lösbare Befestigung dieser aneinander gewährleisten. Entsprechende Befestigungsschnittstellen können z. B. eine form- und/oder kraftschlüssige Befestigung jeweiliger Saug- und/oder Gebläsewerkzeugkörpersegmente 13a aneinander ermöglichen. Beispielhaft wird auf Klips-, Klemm-, Rast- und Schraubbefestigungen verwiesen.

Die Saug- und/oder Gebläsewerkzeugkörpersegmente 13a sind mit wenigstens einem Strömungskanalabschnitt (nicht gezeigt) ausgestattet. Die Strömungskanalabschnitte bilden im aneinander befestigten Zustand jeweiliger Saug- und/oder Gebläsewerkzeugkörpersegmente 13a einen den Saug- und/oder Gebläsewerkzeugkörper 13 zumindest abschnittsweise durchsetzenden Strömungskanal (nicht gezeigt). Der Strömungskanal kommuniziert einerseits mit entsprechenden Saug- und/oder Gebläseöffnungen 14 des Saug- und/oder Gebläsewerkzeugkörpers 13 und andererseits mit einem jeweiligen Leitungselement 15, über welches das Saug- und/oder Gebläsewerkzeug 13 mit dem eine Saug- bzw. Gebläseströmung erzeugenden Teil der Saug- und/oder Gebläseeinrichtung 12 verbunden ist.

Anhand der in den Fig. 3 - 7 gezeigten Ausführungsbeispiele ist ersichtlich, dass ein konstanter Abstand zwischen dem Saug- und/oder Gebläsewerkzeugkörper 13, d. h. insbesondere dem dem Objekt 2 zugewandten Saug- und/oder Gebläsewerkzeugkörperabschnitt, welcher typischerweise jeweilige Saug- und/oder Gebläseöffnungen 14 aufweist, und dem Objekt 2 möglich sein kann. Wenngleich explizit nur in Fig. 3 gezeigt, sind entsprechende Saug- und/oder Gebläseöffnungen 14 selbstverständlich bei allen Ausführungsbeispielen vorhanden.

In dem in Fig. 8 in einer Schnittansicht gezeigten Ausführungsbeispiel weist das Objekt 2 eine mehrere Öffnungen aufweisende kalottenförmige geometrisch-konstruktive Gestalt auf. Das Objekt 2 kann z. B. als ein eine Schaumstruktur aufweisender Schaumkörper vorliegen. Konkret kann es sich bei dem Objekt 2 z. B. um eine künstliche Hüftpfanne bzw. um einen Teil einer solchen handeln. Der Saug- und/oder Gebläsewerkzeugkörper 13 weist eine kanülenartige bzw. -förmige geometrisch-konstruktive längliche Gestalt mit einem gebogenen freien Ende auf. Das Saug- und/oder Gebläsewerkzeugkörper 13 kann durch die in dem Objekt 2 vorhandenen Öffnungen in einen Innenraum des Objekts 2 geführt werden; die Querschnittsgeometrie des Saug- und/oder Gebläsewerkzeugkörper(abschnitt)s ist an die Querschnittsgeometrie der Öffnung angepasst. Durch den Doppelpfeil P1 ist angedeutet, dass der Saug- und/oder Gebläsewerkzeugkörper 13 um eine Rotationsachse rotierbar sein kann.

Aus den Ausführungen im Zusammenhang mit den in den Fig. 3 - 8 gezeigten Ausführungsbeispielen ergibt sich, dass es die Auspackeinrichtung 4 ermöglicht, den Saug- und/oder Gebläsewerkzeugkörper 13 näher an ein auszupackendes Objekt 2 und/oder - im Falle mehrerer auszupackender Objekte 2 - näher zwischen benachbart angeordnete auszupackende Objekte 2 heranzuführen. Der Saug- und/oder Gebläsewerkzeugkörper 13 kann an das Objekt 2 oder, gegebenenfalls durch in dem Objekt 2 vorhandene Öffnungen, in gegebenenfalls vorhandene Innenräume des Objekts 2 geführt werden.

Die Auspackeinrichtung 4 umfasst eine Speichereinrichtung (nicht gezeigt). In der Speichereinrichtung sind mehrere Saug- und/oder Gebläsewerkzeugkörper 13 gegebener geometrisch-konstruktiver Gestalt und/oder mehrere Saug- und/oder Gebläsewerkzeugkörpersegmente 13a gegebener geometrisch-konstruktiver Gestalt anordenbar bzw. angeordnet. Die Saug- und/oder Gebläsewerkzeugkörper(segmente) 13, 13a können in der Speichereinrichtung nach geometrisch-konstruktiven Kriterien, insbesondere nach geometrischer Dimension und/oder geometrischer Grundform, geordnet anordenbar bzw. angeordnet sein. Die Speichereinrichtung kann mehrere Speicherabteile umfassen, welche für die Speicherung bzw. Lagerung von Saug- und/oder Gebläsewerkzeugkörper(segmente)n 13, 13a bestimmter geometrisch-konstruktiver Gestalt vorgesehen, d. h. in ihren Abmessungen entsprechend angepasst, sind, sodass die Speichereinrichtung insgesamt einen möglichst kompakten Aufbau aufweist.
Anhand von Fig. 1 ist ersichtlich, dass die Auspackeinrichtung 4 einen wenigstens drei (unterschiedliche) Roboterachsen A1 - A6 aufweisenden Roboter 7 umfasst. Der Roboter 7 ist z. B. auf einer die Auspackkammer 8 bodenseitig begrenzenden Bodenwandung 8a der Auspackkammer 8 angeordnet. Denkbar ist es jedoch auch, dass der Roboter 7 an einer die Auspackkammer 8 (mit)begrenzenden Seiten- oder Deckenwandung der Auspackkammer 8 angeordnet oder ausgebildet ist. Grundsätzlich sind sowohl stehende als auch (seitlich) hängende Anordnungen von Robotern 7 denkbar.

Der Roboter 7 kann ortsfest oder in wenigstens einem Bewegungsfreiheitsgrad bewegbar gelagert in der Auspackkammer 8 angeordnet sein. Sofern der Roboter 7 nicht über eigene Bewegungsantriebe verfügt, können auspackkammerseitig geeignete Bewegungseinrichtungen (nicht gezeigt) vorhanden sein, welche eine, insbesondere entlang einer bestimmten Bewegungsbahn, geführte Bewegung des Roboters 7 ermöglichen. Entsprechende Bewegungseinrichtungen können z. B. eine geführte Bewegung des Roboters 7 entlang des auszupackenden Objekts 2 bzw. innerhalb des das auszupackende Objekt 2 enthaltenden, in die Auspackstation 1 bewegten Baumoduls 6 ermöglichen. Der Roboter 7 kann dabei in (vor)definierte Auspackpositionen bewegt werden, welche auf Grundlage der geometrisch-konstruktiven Gestalt des auszupackenden Objekts 2 gewählt sein können.

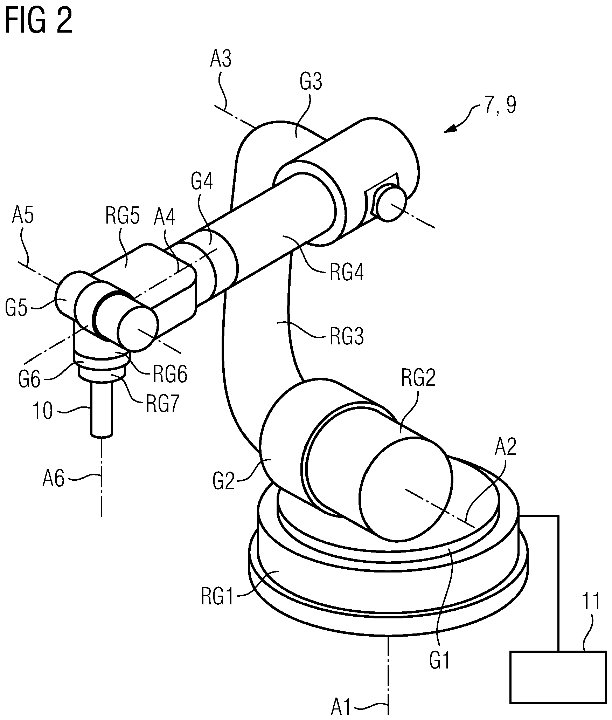

Fig. 2 zeigt eine Prinzipdarstellung eines Roboters 7 gemäß einem Ausführungsbeispiel, welcher Roboter 7 in der in Fig. 1 gezeigten Auspackstation 1 verwendet werden kann.

Der Roboter 7 ist als Gelenk- oder Knickarmroboter ausgeführt und umfasst einen Roboterarm 9. Der Roboterarm 9 umfasst mehrere seriell nacheinander geschaltet angeordnete, über Gelenkelemente G1 - G6 gelenkig miteinander verbundene Roboterglieder RG 1 - RG7. Bei den Gelenkelementen G1 - G6 handelt es sich um Drehgelenke. Die Gelenkelemente G1 - G6 stellen eine drehbare Verbindung jeweils (unmittelbar) benachbart angeordneter Roboterglieder RG 1 - RG7 her. Ersichtlich sind die Roboterachsen A1 - A1 den Gelenkelementen G1 - G6 bzw. den über die Gelenkelemente G1 - G6 miteinander verbundenen Robotergliedern RG1 - RG7 zugeordnet.

Die jeweiligen Roboterachsen A1 - A6 bzw. die Gelenkelemente G1 - G6 bzw. die Roboterglieder RG1 - RG7 sind unabhängig voneinander ansteuerbar und entsprechend unabhängig voneinander bewegbar. Die Steuerung der Bewegungen der Roboterglieder RG1 - RG7, d. h. die Steuerung des Betriebs des Roboters 7, erfolgt über eine hard- und/oder softwaremäßig implementierte Steuereinrichtung 11.

Bei den Robotergliedern RG1 - RG7 handelt es sich in dem in Fig. 2 gezeigten Ausführungsbeispiel um eine Basis (Roboterglied RG1), ein dieser nachgeschaltetes, um die Roboterachse A1 drehbar gelagertes Karussell (Roboterglied RG2), eine diesem nachgeschaltete, um die Roboterachse A2 drehbar gelagerte Schwinge (Roboterglied RG3), einen dieser nachgeschaltete, um die Roboterachse A3 drehbar gelagerten Ausleger (Roboterglied RG4), eine diesem nachgeschaltete, um die Roboterachse A4 drehbar gelagerte mehrachsige Roboterhand (Roboterglied RG5), eine dieser nachgeschaltete, um die Roboterachse A5 drehbar gelagerte Befestigungseinrichtung (Roboterglied RG6) sowie eine dieser nachgeschaltete, um die Roboterachse A6 drehbar gelagerte Werkzeugaufnahmeeinrichtung (Roboterglied RG7). Anstelle der Werkzeugaufnahmeeinrichtung könnte auch ein Roboterwerkzeug angeordnet sein.

An dem (letzten) Gelenk G6 bzw. dem das freie Ende des Roboterarms 9 bildenden (letzten) Roboterglied RG7 ist das Saug- und/oder Gebläsewerkzeug 10 bzw. der Saug- und/oder Gebläsewerkzeugkörper 13 angeordnet.

Das Saug- und/oder Gebläsewerkzeug 10 bzw. der Saug- und/oder Gebläsewerkzeugkörper 13 kann lösbar an der Roboterachse A6 bzw. dem Roboterglied RG7 angeordnet bzw. befestigt sein. Zur Realisierung einer lösbaren Befestigung können seitens der Roboters 7 und/oder seitens des Saug- und/oder Gebläsewerkzeugs 10 bzw. des Saug- und/oder Gebläsewerkzeugkörpers 13 geeignete, insbesondere mechanische, Befestigungsschnittstellen (nicht gezeigt) angeordnet oder ausgebildet sein, welche eine lösbare Befestigung des Saug- und/oder Gebläsewerkzeugs 10 bzw. des Saug- und/oder Gebläsewerkzeugkörpers 13 an der Roboterachse A6 bzw. dem Roboterglied RG7 ermöglichen. Eine lösbare Befestigung des Saug- und/oder Gebläsewerkzeugs 10 bzw. des Saug- und/oder Gebläsewerkzeugkörpers 13 an der Roboterachse A6 bzw. dem Roboterglied RG7 kann auch dadurch realisiert sein, dass die Roboterachse A6 bzw. das Roboterglied RG7 ein Greifelement umfasst, welches zum Greifen des Saug- und/oder Gebläsewerkzeugs 10 bzw. des Saug- und/oder Gebläsewerkzeugkörpers 13 eingerichtet ist.

Durch die lösbare Anordnung bzw. Befestigung des Saug- und/oder Gebläsewerkzeugs 10 bzw. des Saug- und/oder Gebläsewerkzeugkörpers 13 an der Roboterachse A6 bzw. dem Roboterglied RG7 ist es möglich, dass ein Saug- und/oder Gebläsewerkzeug 10 bzw. ein Saug- und/oder Gebläsewerkzeugkörper 13 bedarfsweise auswechselbar an der Roboterachse A6 bzw. dem Roboterglied RG7 angeordnet bzw. befestigt ist. Der Roboter 7 kann, z. B. in einem hierfür eigens vorgesehenen Werkzeugwechselmodus bzw. -programm, eingerichtet sein, einen automatisierten Wechsel eines Saug- und/oder Gebläsewerkzeugs 10 bzw. eines Saug- und/oder Gebläsewerkzeugkörpers 13 vorzunehmen. Hierbei kann der Roboter 7, d. h. insbesondere die Roboterachse A6 bzw. das Roboterglied RG7, z. B. in eine Auswechselposition bewegbar sein, in welcher der Roboter 7 selbstständig einen Werkzeugwechsel vornimmt. In der Auswechselposition kann der Roboter 7, d. h. wenigstens die Roboterachse A6 bzw. das Roboterglied RG7, an welcher das Saug- und/oder Gebläsewerkzeug 10 bzw. der Saug- und/oder Gebläsewerkzeugkörper 13 lösbar zu befestigen bzw. befestigt ist, Saug- und/oder Gebläsewerkzeuge 10 bzw. Saug- und/oder Gebläsewerkzeugkörper 13 in eine der Auspackeinrichtung 4 zugeordnete Speichereinrichtung geben bzw. aus einer der Auspackeinrichtung 4 zugeordneten Speichereinrichtung entnehmen.
Wie erwähnt, umfasst die Auspackeinrichtung 4 eine hard- und/oder softwaremäßig implementierte Steuereinrichtung 1. Die Steuereinrichtung ist insbesondere zur Erzeugung von die Bewegungen der Roboterachsen A1 - A6 im Betrieb des Roboters 7 steuernden Steuerungsinformationen eingerichtet. Die Steuereinrichtung 11 ist eingerichtet, insbesondere unter Berücksichtigung der geometrisch-konstruktiven Gestalt eines auszupackenden Objekts 2, den Roboter 7 anzusteuern, sodass dieser einen Saug- und/oder Gebläsewerkzeugkörper 13 mit einer an wenigstens einen Teilbereich der geometrisch-konstruktiven Gestalt des auszupackenden Objekts 2 angepassten geometrisch-konstruktiven Gestalt und/oder mehrere Saug- und/oder Gebläsewerkzeugkörpersegmente 13a zur Ausbildung eines Saug- und/oder Gebläsewerkzeugkörpers 13 mit einer an wenigstens einen Teilbereich der geometrisch-konstruktiven Gestalt des auszupackenden Objekts 2 angepassten geometrisch-konstruktiven Gestalt auswählt und zum Auspacken des auszupackenden Objekts 2 verwendet.
Die Steuereinrichtung 11 kann ferner eingerichtet sein, entsprechende Steuerungsinformationen auf Grundlage von die geometrisch-konstruktive Gestalt des jeweils auszupackenden Objekts 2 beschreibenden Daten, insbesondere auf Grundlage von die geometrisch-konstruktive Gestalt des jeweils auszupackenden Objekts 2 beschreibenden Baudaten, zu erzeugen. Die Bewegungen der Roboterachsen A1 - A6 können sonach auf die geometrisch-konstruktive Gestalt bzw. die geometrisch-konstruktiven Merkmale, d. h. insbesondere die Außen- und/oder Innenkontur, etwaige Hinterschneidungen, etc., des auszupackenden Objekts 2 abgestimmt sein. Auspackvorgänge können individuell unter Berücksichtigung der geometrisch-konstruktiven Gestalt des jeweils auszupackenden Objekts 2 gesteuert werden.
Für alle Ausführungsbeispiele gilt, dass es sich bei dem Saug- und/oder Gebläsewerkzeugkörper 13 bzw. einem entsprechenden Saug- und/oder Gebläsewerkzeugkörpersegment 13a um ein additiv hergestelltes Objekt handeln kann.

## Patentansprüche

1. Auspackeinrichtung (4) zum Auspacken eines additiv hergestellten dreidimensionalen Objekts (2) aus dem dieses nach Beendigung eines additiven Bauvorgangs umgebenden nicht verfestigten Baumaterial (3), umfassend eine Saug- und/oder Gebläseeinrichtung (12), welche wenigstens ein Saug- und/oder Gebläsewerkzeug (10) mit einem Saug- und/oder Gebläsewerkzeugkörper (12) umfasst, wobei die geometrisch-konstruktive Gestalt des Saug- und/oder Gebläsewerkzeugkörpers (13) an wenigstens einen Teilbereich der geometrisch-konstruktiven Gestalt wenigstens eines auszupackenden additiv hergestellten dreidimensionalen Objekts (2) anpassbar oder angepasst ist,
umfassend eine Speichereinrichtung, wobei in der Speichereinrichtung mehrere Saug- und/oder Gebläsewerkzeugkörper (13) gegebener geometrisch-konstruktiver Gestalt und/oder mehrere Saug- und/oder Gebläsewerkzeugkörpersegmente (13a) gegebener geometrisch-konstruktiver Gestalt anordenbar oder angeordnet sind, wobei
die Auspackeinrichtung (4) einen wenigstens drei Roboterachsen (A1 - A6) aufweisenden Roboter (7), insbesondere Industrieroboter, umfasst, wobei der Saug- und/oder Gebläsewerkzeugkörper (13) an einer Roboterachse (A6) angeordnet oder ausgebildet ist, wobei
der Saug- und/oder Gebläsewerkzeugkörper (13) lösbar an der Roboterachse (A6), angeordnet ist, sodass er bedarfsweise auswechselbar an der Roboterachse (A6) angeordnet ist, wobei
eine Steuereinrichtung (11) vorhanden ist, welche zur Erzeugung von die Bewegungen der Roboterachsen (A1 - A6) im Betrieb des Roboters (7) steuernden Steuerungsinformationen eingerichtet ist, wobei die Steuereinrichtung (11) eingerichtet ist, insbesondere unter Berücksichtigung der geometrisch-konstruktiven Gestalt eines auszupackenden additiv hergestellten dreidimensionalen Objekts (2), den Roboter (7) anzusteuern, sodass dieser einen Saug- und/oder Gebläsewerkzeugkörper (13) mit einer an wenigstens einen Teilbereich der geometrisch-konstruktiven Gestalt des auszupackenden additiv hergestellten dreidimensionalen Objekts (2) angepassten geometrisch-konstruktiven Gestalt und/oder mehrere Saug- und/oder Gebläsewerkzeugkörpersegmente (13a) zur Ausbildung eines Saug- und/oder Gebläsewerkzeugkörpers (13) mit einer an wenigstens einen Teilbereich der geometrisch-konstruktiven Gestalt des auszupackenden additiv hergestellten dreidimensionalen Objekts (2) angepassten geometrisch-konstruktiven Gestalt auswählt und zum Auspacken des auszupackenden additiv hergestellten dreidimensionalen Objekts (2) verwendet.

2. Auspackeinrichtung nach Anspruch 1, **dadurch gekennzeichnet, dass** der Saug- und/oder Gebläsewerkzeugkörper (13) zumindest abschnittsweise eine zwei- oder dreidimensional geradlinig verlaufende Grundform und/oder zumindest abschnittsweise eine zwei- oder dreidimensional gebogen verlaufende Grundform und/oder aufweist.

3. Auspackeinrichtung nach Anspruch 1 oder 2, **dadurch gekennzeichnet, dass** die geometrisch-konstruktive Gestalt des Saug- und/oder Gebläsewerkzeugkörpers (13) auf Grundlage von die geometrisch-konstruktive Gestalt wenigstens eines auszupackenden additiv hergestellten dreidimensionalen Objekts (2) beschreibenden Daten, insbesondere auf Grundlage von die geometrisch-konstruktive Gestalt eines auszupackenden additiv hergestellten dreidimensionalen Objekts (2) beschreibenden Baudaten, gewählt ist.

4. Auspackeinrichtung nach einem der vorhergehenden Ansprüche, **dadurch gekennzeichnet, dass** der Saug- und/oder Gebläsewerkzeugkörper (13) mehrere Saug- und/oder Gebläsewerkzeugkörpersegmente (13a) umfasst, welche unter Ausbildung des Saug- und/oder Gebläsewerkzeugkörpers (13) lösbar aneinander befestigbar oder befestigt sind.

5. Auspackeinrichtung nach Anspruch 4, **dadurch gekennzeichnet, dass** wenigstens zwei Saug- und/oder Gebläsewerkzeugkörpersegmente (13a) eine gleiche oder eine unterschiedliche geometrisch-konstruktive Gestalt aufweisen.

6. Auspackeinrichtung nach einem der vorhergehenden Ansprüche, **dadurch gekennzeichnet, dass** die Saug- und/oder Gebläsewerkzeugkörper (13) und/oder die Saug- und/oder Gebläsewerkzeugkörpersegmente (13a) in der Speichereinrichtung nach geometrisch-konstruktiven Kriterien, insbesondere nach geometrischer Dimension und/oder geometrischer Grundform, geordnet anordenbar oder angeordnet sind.

7. Auspackeinrichtung nach einem der vorhergehenden Ansprüche, **gekennzeichnet durch** eine Steuereinrichtung (11), welche zur Erzeugung von die Bewegungen der Roboterachsen (A1 - A6) im Betrieb des Roboters (7) steuernden Steuerungsinformationen eingerichtet ist, wobei die Steuereinrichtung (11) eingerichtet ist, die Steuerungsinformationen auf Grundlage von die geometrisch-konstruktive Gestalt wenigstens eines auszupackenden additiv hergestellten dreidimensionalen Objekts (2) beschreibenden Daten, insbesondere auf Grundlage von die geometrisch-konstruktive Gestalt wenigstens eines auszupackenden additiv hergestellten dreidimensionalen Objekts (2) beschreibenden Baudaten, zu erzeugen.

8. Auspackeinrichtung nach einem der vorhergehenden Ansprüche, **dadurch gekennzeichnet, dass** der Saug- und/oder Gebläsewerkzeugkörper (13) zumindest abschnittsweise ein additiv hergestelltes Bauteil bzw. eine additiv hergestellte Bauteilgruppe ist.

9. Auspackstation (1) für eine Anlage zur additiven Herstellung dreidimensionaler Objekte (2), **dadurch gekennzeichnet, dass** sie wenigstens eine Auspackeinrichtung (4) nach einem der vorhergehenden Ansprüche umfasst.

10. Auspackstation nach Anspruch 9, **gekennzeichnet durch** eine, insbesondere quaderförmige, Auspackkammer (8), wobei die Auspackeinrichtung (4) an oder in einer die Auspackkammer (8) begrenzenden Boden-, Seiten- oder Deckenwandung angeordnet oder ausgebildet ist.

11. Auspackstation nach Anspruch 9 oder 10, **dadurch gekennzeichnet, dass** die Auspackeinrichtung (4) ortsfest oder in wenigstens einem Bewegungsfreiheitsgrad bewegbar gelagert in der Auspackkammer (8) angeordnet oder ausgebildet ist

12. Anlage zur additiven Herstellung dreidimensionaler Objekte (2), **dadurch gekennzeichnet, dass** sie wenigstens eine Auspackstation (1) nach einem der Ansprüche 9 bis 11 umfasst.

## Claims

1. Unpacking device (4) for unpacking an additively manufactured three-dimensional object (2) from the non-solidified construction material (3) surrounding it once an additive construction process has been completed, comprising a suction and/or blower device (12) which comprises at least one suction and/or blower tool (10) with a suction and/or blower tool body (12), wherein the geometric structural design of the suction and/or blower tool body (13) can be or is adapted to at least a partial region of the geometric structural design of at least one additively manufactured three-dimensional object (2) which is to be unpacked,
comprising a storage device, wherein a plurality of suction and/or blower tool bodies (13) of given geometric structural design and/or a plurality of suction and/or blower tool body segments (13a) of given geometric structural design can be or are arranged in the storage device, wherein
the unpacking device (4) comprises a robot (7), in particular industrial robot, having at least three robot axes (A1 - A6), wherein the suction and/or blower tool body (13) is arranged or formed on one robot axis (A6), wherein
the suction and/or blower tool body (13) is arranged detachably on the robot axis (A6), so that it is arranged exchangeably as required on the robot axis (A6), wherein
a control device (11) is present which is set up to generate control information controlling the movements of the robot axes (A1 - A6) during operation of the robot (7), wherein the control device (11) is set up, in particular taking into account the geometric structural design of an additively manufactured three-dimensional object (2) which is to be unpacked, to control the robot (7) so that it selects a suction and/or blower tool body (13) with a geometric structural design adapted to at least a partial region of the geometric structural design of the additively manufactured three-dimensional object (2) which is to be unpacked, and/or a plurality of suction and/or blower tool body segments (13a) to form a suction and/or blower tool body (13) with a geometric structural design adapted to at least a partial region of the geometric structural design of the additively manufactured three-dimensional object (2) which is to be unpacked, and uses it/them to unpack the additively manufactured three-dimensional object (2) which is to be unpacked.

2. Unpacking device according to Claim 1, **characterised in that** the suction and/or blower tool body (13), at least in portions, has a two-dimensionally or three-dimensionally rectilinear basic form and/or, at least in portions, has a two-dimensionally or three-dimensionally curved basic form.

3. Unpacking device according to Claim 1 or 2, **characterised in that** the geometric structural design of the suction and/or blower tool body (13) is selected on the basis of data describing the geometric structural design of at least one additively manufactured three-dimensional object (2) which is to be unpacked, in particular on the basis of construction data describing the geometric structural design of an additively manufactured three-dimensional object (2) which is to be unpacked.

4. Unpacking device according to one of the preceding claims, **characterised in that** the suction and/or blower tool body (13) comprises a plurality of suction and/or blower tool body segments (13a) which can be or are fastened detachably to each other, forming the suction and/or blower tool body (13).

5. Unpacking device according to Claim 4, **characterised in that** at least two suction and/or blower tool body segments (13a) have an identical or a different geometric structural design.

6. Unpacking device according to one of the preceding claims, **characterised in that** the suction and/or blower tool bodies (13) and/or the suction and/or blower tool body segments (13a) can be or are arranged in ordered manner in the storage device according to geometric structural criteria, in particular according to geometric dimension and/or geometric basic form.

7. Unpacking device according to one of the preceding claims, **characterised by** a control device (11) which is set up to generate control information controlling the movements of the robot axes (A1 - A6) during operation of the robot (7), wherein the control device (11) is set up to generate the control information on the basis of data describing the geometric structural design of at least one additively manufactured three-dimensional object (2) which is to be unpacked, in particular on the basis of construction data describing the geometric-constructive design of at least one additively manufactured three-dimensional object (2) which is to be unpacked.

8. Unpacking device according to one of the preceding claims, **characterised in that** the suction and/or blower tool body (13), at least in portions, is an additively manufactured component or an additively manufactured component group.

9. Unpacking station (1) for an installation for additively manufacturing three-dimensional objects (2), **characterised in that** it comprises at least one unpacking device (4) according to one of the preceding claims.

10. Unpacking station according to Claim 9, **characterised by** an in particular cuboid unpacking chamber (8), wherein the unpacking device (4) is arranged or formed on or in a bottom, side or top wall delimiting the unpacking chamber (8).

11. Unpacking station according to Claim 9 or 10, **characterised in that** the unpacking device (4) is arranged or formed in a fixed manner or mounted movably in at least one degree of freedom of movement in the unpacking chamber (8).

12. Installation for additively manufacturing three-dimensional objects (2), **characterised in that** it comprises at least one unpacking station (1) according to one of Claims 9 to 11.

## Revendications

1. Dispositif de déballage (4) servant à déballer un objet (2) tridimensionnel fabriqué de manière additive, composé du matériau de construction (3) non solidifié l'entourant à la fin d'une opération de construction additive, comprenant un dispositif d'aspiration et/ou de soufflante (12), lequel comprend au moins un outil d'aspiration et/ou de soufflante (10) avec un corps d'outil s'aspiration et/ou de soufflante (12), dans lequel la configuration structurelle géométrique du corps d'outil d'aspiration et/ou de soufflante (13) peut être adaptée ou est adaptée à au moins une zone partielle de la configuration structurelle géométrique d'au moins un objet (2) tridimensionnel fabriqué de manière additive à déballer,
comprenant un dispositif de stockage, dans lequel plusieurs corps d'outil d'aspiration et/ou de soufflante (13) d'une forme structurelle géométrique donnée et/ou plusieurs segments de corps d'outil d'aspiration et/ou de soufflante (13a) d'une forme structurelle géométrique donnée peuvent être disposés ou sont disposés dans le dispositif de stockage, dans lequel le dispositif de déballage (4) comprend un robot (7) présentant au moins trois axes de robot (A1 - A6), en particulier un robot industriel, dans lequel le corps d'outil d'aspiration et/ou de soufflante (13) est disposé ou réalisé au niveau d'un axe de robot (A6), dans lequel
le corps d'outil d'aspiration et/ou de soufflante (13) est disposé de manière amovible au niveau de l'axe de robot (A6) de sorte qu'il est disposé si besoin de manière interchangeable au niveau de l'axe de robot (A6), dans lequel un dispositif de commande (11) est présent, lequel est mis au point pour générer des informations de commande commandant les déplacements des axes de robot (A1 - A6) lors du fonctionnement du robot (7), dans lequel le dispositif de commande (11) est mis au point pour piloter le robot (7) en particulier en tenant compte de la forme structurelle géométrique d'un objet (2) tridimensionnel fabriqué de manière additive à déballer de sorte que ce dernier choisit un corps d'outil d'aspiration et/ou de soufflante (13) avec une forme structurelle géométrique adaptée à au moins une zone partielle de la forme structurelle géométrique de l'objet (2) tridimensionnel fabriqué de manière additive à déballer et/ou plusieurs sections de corps d'outil d'aspiration et/ou de soufflante (13a) pour réaliser un corps d'outil d'aspiration et/ou de soufflante (13) avec une forme structurelle géométrique adaptée à au moins une zone partielle de la forme structurelle géométrique de l'objet (2) tridimensionnel fabriqué de manière additive à déballer et l'utilise pour déballer l'objet (2) tridimensionnel fabriqué de manière additive à déballer.

2. Dispositif de déballage selon la revendication 1, **caractérisé en ce que** le corps d'outil d'aspiration et/ou de soufflante (13) présente au moins par endroits une forme de base s'étendant de manière rectiligne sur le plan bi- ou tridimensionnel et/ou au moins par endroits une forme de base s'étendant de manière cintrée sur le plan bi- ou tridimensionnel.

3. Dispositif de déballage selon la revendication 1 ou 2, **caractérisé en ce que** la forme structurelle géométrique du corps d'outil d'aspiration et/ou de soufflante (13) est choisie sur la base de données décrivant la forme structurelle géométrique d'au moins un objet (2) tridimensionnel fabriqué de manière additive à déballer, en particulier sur la base de données de construction décrivant la forme structurelle géométrique d'un objet (2) tridimensionnel fabriqué de manière additive à déballer.

4. Dispositif de déballage selon l'une quelconque des revendications précédentes, **caractérisé en ce que** le corps d'outil d'aspiration et/ou de soufflante (13) comprend plusieurs segments de corps d'outil d'aspiration et/ou de soufflante (13a), lesquels peuvent être fixés ou sont fixés de manière amovible les uns au niveau des autres en réalisant le corps d'outil d'aspiration et/ou de soufflante (13).

5. Dispositif de déballage selon la revendication 4, **caractérisé en ce qu'au** moins deux segments de corps d'outil d'aspiration et/ou de soufflante (13a) présentent une forme structurelle géométrique identique ou une forme structurelle géométrique différente.

6. Dispositif de déballage selon l'une quelconque des revendications précédentes, **caractérisé en ce que** les corps d'outil d'aspiration et/ou de soufflante (13) et/ou les segments de corps d'outil d'aspiration et/ou de soufflante (13a) peuvent être disposés ou sont disposés dans le dispositif de stockage selon des critères structurels géométriques, en particulier selon une dimension géométrique et/ou une forme de base géométrique.

7. Dispositif de déballage selon l'une quelconque des revendications précédentes, **caractérisé par** un dispositif de commande (11), lequel est mis au point pour générer des informations de commande commandant les déplacements des axes de robot (A1 - A6) lors du fonctionnement du robot (7), dans lequel le dispositif de commande (11) est mis au point pour générer les informations de commande sur la base de données décrivant la forme structurelle géométrique d'au moins un objet (2) tridimensionnel fabriqué de manière additive à déballer, en particulier sur la base de données de construction décrivant la forme structurelle géométrique d'un objet (2) tridimensionnel fabriqué de manière additive à déballer.

8. Dispositif de déballage selon l'une quelconque des revendications précédentes, **caractérisé en ce que** le corps d'outil d'aspiration et/ou de soufflante (13) est au moins par endroits un composant fabriqué de manière additive ou un groupe de composants fabriqué de manière additive.

9. Poste de déballage (1) pour une installation servant à la fabrication additive d'objets (2) tridimensionnels, **caractérisé en ce qu'il** comprend au moins un dispositif de déballage (4) selon l'une quelconque des revendications précédentes.

10. Poste de déballage selon la revendication 9, **caractérisé par** une chambre de déballage (8) en forme carrée, dans lequel le dispositif de déballage (4) est disposé ou réalisé au niveau de ou dans une paroi au sol, latérale ou formant couvercle délimitant la chambre de déballage (8).

11. Poste de déballage selon la revendication 9 ou 10, **caractérisé en ce que** le dispositif de déballage (4) est disposé ou réalisé dans la chambre de déballage (8) de manière stationnaire ou tout en étant monté de manière à pouvoir déplacé selon au moins un degré de liberté de mouvement.

12. Installation servant à la fabrication additive d'objets (2) tridimensionnels, **caractérisée en ce qu'elle** comprend au moins un poste de déballage (1) selon l'une quelconque des revendications 9 à 11.
